# EUROPÄISCHE PATENTSCHRIFT

(11) **EP 2 349 674 B1**
(45) Veröffentlichungstag und Bekanntmachung des Hinweises auf die Patenterteilung: **14.05.2014**
(21) Anmeldenummer: 09748969.4
(22) Anmeldetag: 05.10.2009
(51) Int. Cl.: B29C 45/72

(54) **ELEKTRISCH ANGETRIEBENE FORMSCHLIESSEINHEIT AN EINER SPRITZGIESSMASCHINE**
ELECTRICALLY DRIVEN MOLD CLAMPING UNIT ON AN INJECTION MOLDING MACHINE
UNITÉ DE FERMETURE DE MOULE ENTRAÎNÉE ÉLECTRIQUEMENT SUR MACHINE À MOULER PAR INJECTION LES MATIÈRES PLASTIQUES

(30) Priorität: 10.10.2008 DE 102008051285
(43) Veröffentlichungstag der Anmeldung: 03.08.2011
(73) Patentinhaber: Keinath, Renate, 72336 Balingen (DE)
(72) Erfinder: Keinath, Renate, 72336 Balingen (DE)
(74) Vertreter: Reinhardt, Harry
(86) Internationale Anmeldenummer: PCT/EP2009/007092
(87) Internationale Veröffentlichungsnummer: WO 2010/040483

(56) Entgegenhaltungen:
- WO-A1-94/04337
- DE-A1- 4 328 844
- DE-A1- 4 334 134
- DE-B- 1 137 275
- DE-U1- 20 111 265
- JP-A- 11 314 257
- JP-A- 2002 273 770

## Beschreibung

Die Erfindung betrifft ein Formschließeinheit für Spritzgießformen an einer Spritzgießmaschine zur Verarbeitung von Kunststoffen und anderer plastifizierbarer Massen wie keramische oder pulvrige Massen nach dem Oberbegriff des Anspruches 1.

Eine derartige Formschließeinheit ist aus der EP 0 658 136 B1 bekannt, wobei dort für eine symmetrische Krafteinleitung in einen Knebelmechanismus sowie für einen Energie sparenden Betrieb als Antriebsmotor eine flüssigkeitsgekühlter Servomotor zur Erzielung einer höheren Energieausbeute verwendet wird. Durch das Wasser als Kühlmedium kann vom elektrischen Servomotor abgefühlte Wärme als Energie rückgewonnen werden und anschließend beispielsweise zur Werkzeugtemperierung genutzt werden. Der Servomotor treibt eine drehfeste Spindel an, sodass sich ein günstiges mechanisches System ergibt.

Aus der DE 10 2004 042 744 A1 ist eine Schließeinheit für eine Spritzgießmaschine bekannt, bei der eine Schmiermittelversorgung vorgesehen ist, durch die sowohl die Gelenke eines Kniehebels als auch ein Spindeltrieb mit Spindel und Spindelmutter mit Schmiermittel versorgt werden.

Ausgehend von diesem Stand der Technik liegt der vorliegenden Erfindung die Aufgabe zu Grunde, eine effizientere Kühlung des Spindelantriebs zu erreichen.

Diese Aufgabe wird durch eine Formschließeinheit mit den Merkmalen des Anspruches 1 gelöst.

Da auch elektromechanische Antriebe an Kunststoffspritzgießmaschinen zunehmend mit sehr hoher Dynamik sowohl in Geschwindigkeit als auch Beschleunigung betrieben werden, wird nun die bei einem derartigen mechanischen Antrieb durch das Zusammenwirken von Spindel und Mutter anfallende Wärme direkt aus dem Spindelantrieb, bestehend aus Spindel, Mutter und Lager abgeleitet. Durch die unmittelbare Kühlung ergibt sich eine höhere Lebensdauer des Spindelsystems sowie auch eine höhere Lebensdauer der Lagerung. Dies führt zu einer höheren Genauigkeit des Gesamtsystems durch eine gleichmäßige Ausdehnung, die bei einer Ableitung von Wärme allein aus dem Motor, der von der die Wärme vor allem erzeugenden Lagerstelle entfernt ist, nicht gewährleistet werden kann. Gleichzeitig kann damit eine Ableitung der Wärme aus den Tragelementen der Maschine wie Abstützelement oder Formträger ebenso erfolgen wie mittelbar eine Abführung der Wärme aus den Motorsystemen.

Vorzugsweise kann durch das Anflanschen des Motors an die Lager- oder Kühleinheit gleichzeitig dem Motor soviel Wärme entzogen werden, dass auf eine grundsätzlich hocheffiziente Flüssigkeitskühlung des Motors selbst, zum Beispiel durch Wasser, verzichtet werden kann. In der Regel genügt für die Motorkühlung die reine Abstrahlmöglichkeit über Kühlrippen bzw. die deutliche wirkungsgradgeringere Luftkühlung.

Besonders vorteilhaft ist eine Anordnung der Lagerstelle innerhalb des Abstützelements für den Schließmechanismus, da dann über das Abstützelement nicht nur die präzise Lagerung gewährleistet ist, sondern auch die Kühlung erfolgen kann. Ebenso ist eine Anordnung der Kühlkanäle in einem Zwischenflansch von Vorteil, der insofern Lagerstelle und Antriebsmotor "klimatisch" voneinander isoliert und als Wärmesenke gleichzeitig in beiden Richtungen, das heißt sowohl vom Motor als auch von der Lagerstelle Wärme ableiten kann.

Wenn extrem hohe Genauigkeiten verlangt werden, kann neben einer normalen Wasserkühlung auch eine exakt geregelte Temperierung von Vorteil sein.

Weitere Vorteile ergeben sich aus den Unteransprüchen sowie aus der nachfolgenden Beschreibung eines bevorzugten Ausführungsbeispiels.

Im Folgenden wird die Erfindung anhand der beigefügten Figuren näher erläutert. Es zeigen:
- Fig.1: eine Schnittansicht in Längsrichtung durch eine Formschließeinheit mit einem Kniehebelmechanismus als Schließmechanismus,
- Fig. 2: einen vergrößerten Ausschnitt der im Abstützelement 20 von Fig. 1 gelagerten Antriebseinheit mit Antriebsmotor und Spindelantrieb

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

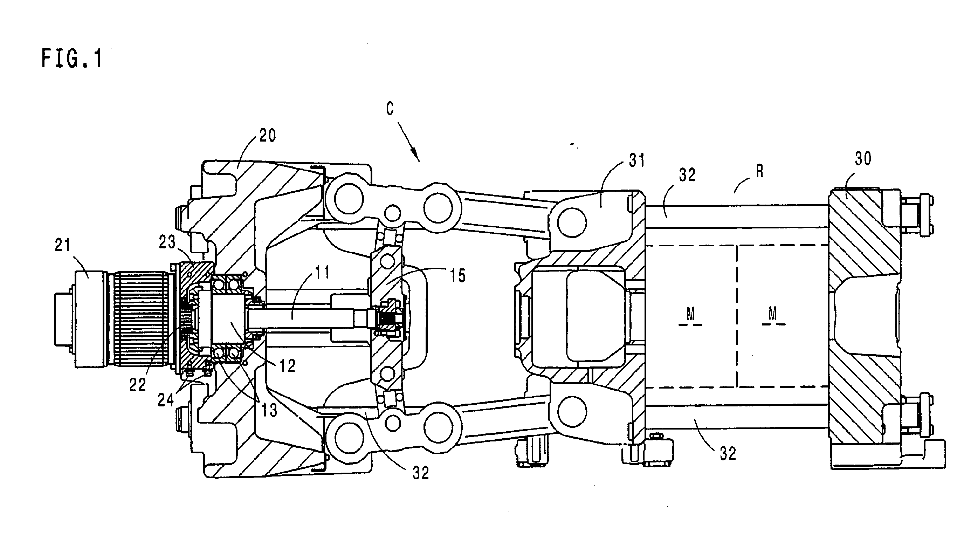

Die Figuren zeigen eine Formschließeinheit für Spritzgießformen wie die Spritzgießform M, die in Fig. 1 gestrichelt angedeutet ist. Die Formschließeinheit wird an einer Spritzgießmaschine zur Verarbeitung von Kunststoffen und anderen plastifizierbaren Massen wie keramischen oder pulvrigen Massen eingesetzt. Üblicherweise ist der Formschließeinheit in Figur 1 von der rechten Seite her eine Plastinfiziereinheit zugeordnet, die zeichnerisch nicht dargestellt ist. Die Plastifiziereinheit plastifiziert die plastifizierbare Masse und spritzt sie in einen Formhohlraum der Spritzgießform M ein. Zur Herstellung der Spritzteile wird die Spritzgießform M zyklisch durch einen Schließmechanismus C geöffnet und geschlossen. Dazu ist die Spritzgießform M in einem Formspannraum R aufgenommen, der zwischen einem ersten, vorzugsweise stationären Formträger 30 und einem beweglichen Formträger 31 aufgespannt ist. In Figur 1 ist die Spritzgießform geschlossen. Der Schließmechanismus C stützt sich an einem Abstützelement 20 ab, wobei im Ausführungsbeispiel ein elektromechanischer Schließmechanismus vorgesehen ist, der hier als Knebelmechanismus ausgebildet ist. Andere elektromechanische Antriebe, zum Beispiel über reine Spindelantriebe sind denkbar. In Folge der Betätigung des Schließmechanismus C öffnet und schließt sich die Spritzgießform M zyklisch unter Bewegung des beweglichen Formträgers 31 auf den ersten Formträger 30 zu und von diesem weg. Abstützelement 20 und erster Formträger 30 sind über Kraftübertragungselemente wie Holme 32 miteinander verbunden. Dies Holme können - müssen aber nicht - gleichzeitig dem beweglichen Formträger 31 als Führung dienen.

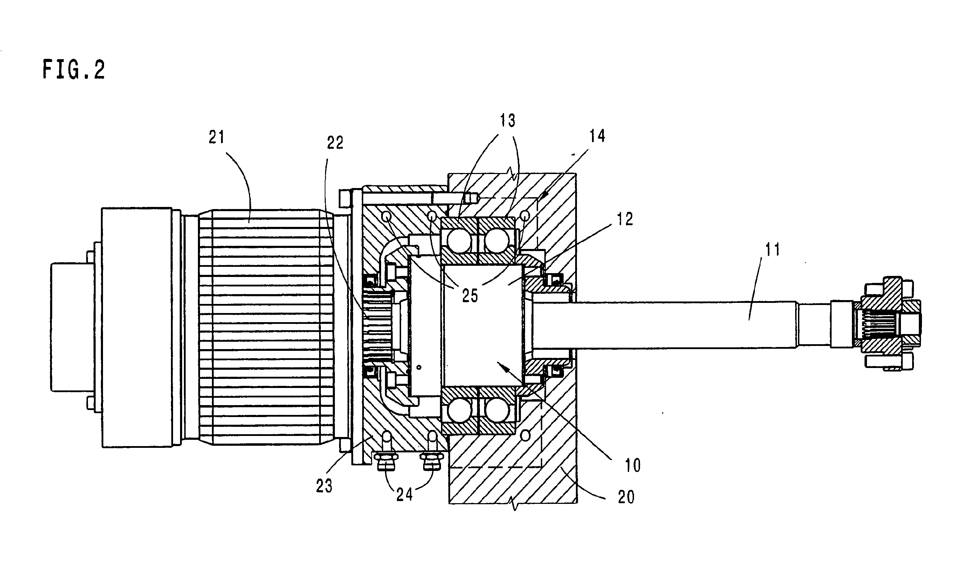

Der Schließmechanismus C weist einen Servomotor als Antriebsmotor 21 auf, wobei als Servomotor zum Beispiel ein AC-Synchron-Motor oder ein Drehstrom-Synchron-Motor in Fragen kommt. Der Servomotor treibt einen Spindelantrieb 10 mit einer Spindelmutter 12 und einer Spindel 11 an. Spindelmutter 12 und Spindel greifen im Bereich einer Lagerstelle 14 ineinander ein, wie sie in Fig.2 gezeigt ist. Als Spindelantrieb kommen zum Beispiel die bekannten Spindelantriebe in Frage, das heißt zum Beispiel Gewindespindeln, Kugelrollspindeln oder Kugelumlaufspindeln. Die Spindel 11 steht zur Bewegung des beweglichen Formträgers 30 mit diesem in Wirkverbindung. Im Ausführungsbeispiel ist die Spindel drehfest mit dem Kreuzkopf 15 des Schließmechanismus C verbunden, sie könnte jedoch auch drehfest mit einer anderen Stelle des Kniehebelmechanismus oder mit einem anderen Element der Formschließeinheit oder eines anderen Schließmechanismus verbunden sein, solange eine zyklische Bewegung des beweglichen Formträgers 31 gewährleistet ist. An Stelle der in Fig. 1 dargestellten Drei-Platten-Formschließeinheit ist auch eine Zwei-Platten-Formschließeinheit verwendbar, bei der die Antriebseinheit zum Beispiel am stationären Formträger 30 angeordnet ist.

Fig. 2 zeigt einen vergrößerten Ausschnitt aus Fig. 1 im Bereich der Lagerstelle 14. Deutlich ist zu erkennen, dass dort Kühlkanäle 25 vorgesehen sind, die die Lagerstelle 14, das heißt den Bereich, in dem die Spindelmutter 12 mit der Spindel 11 in Wirkverbindung steht und/oder eine der Lagerplatte zugeordnete Kühlplatte 23 durchsetzen. Zu erkennen sind ferner die Lager 13, welche die Spindelmutter 12 im Ausführungsbeispiel rotatorisch drehbar, jedoch axial unverschieblich lagern. Alternativ ist auch denkbar, die Mutter drehfest zu lagern und die Spindel zu rotieren. Wesentlich ist, dass die durch das ineinander Greifen von Spindel und Spindelmutter bei deren Relativbewegung zueinander entstehende Wärme unmittelbar im Bereich der Lagerstelle der beiden Elemente abgeleitet wird.

Der Antriebsmotor 21 treibt über die Antriebswelle 22 das drehende Element von Spindel 11 und Spindelmutter 12, das heißt im Ausführungsbeispiel die Spindelmutter 12 an. Im Ausführungsbeispiel greift die Antriebswelle 22 bereits in eine Zwischenplatte in Form der Kühlplatte 23 ein, die zwischen Antriebsmotor 21 und Lagerstelle 14 vorgesehen ist und insofern bereits eine "klimatische" Trennung von Antriebsmotor 21 und Spindelantrieb 10 erzeugt.

Durch die unmittelbare Kühlung lassen sich derartige Antriebe selbst als Hochleitungsantriebe mit höchster Dynamik in Geschwindigkeit und Beschleunigung betreiben. Die direkte Kühlung trägt insbesondere dann, aber nicht nur dann zu einer höheren Lebensdauer des Spindelsystems als auch der Lagerung bei. Dies geht einher mit einer höheren Genauigkeit durch einer gleichmäßige Ausdehnung des Systems. Da zudem die Lagerstelle 14 meist auch an anderen Elementen der Maschine unmittelbar anliegt oder abgestützt ist, so wie im Ausführungsbeispiel im Bereich des Abstützelements 20, kann auch von dort die Wärme aus den Tragelementen der Maschine unmittelbar abgeleitet werden, wobei nebenbei auch noch Wärme aus den Motorsystemen selbst abgeleitet werden kann. Durch das Anflanschen des Antriebsmotors 21 an die Lagerstelle 14 und/oder Kühlplatte 23 wird gleichzeitig dem Antriebsmotor 21 selbst soviel Wärme entzogen, dass dort auf eine hocheffiziente Flüssigkeitskühlung zum Beispiel durch Wasser verzichtet werden kann. Dort genügt in der Regel dann die reine Abstrahlmöglichkeit über Kühlrippen bzw. die deutlich wirkungsgradgeringere Luftkühlung. Dennoch kann die beschriebene Kühlung der Lagerstelle auch in Verbindung mit einem flüssigkeitsgekühlten Servomotor erfolgen.

Der Antriebsmotor ist vorzugsweise ein Hohlwellenmotor, da bei einer Überführung des Kniehebelmechanismus als Schießmechanismus C in Fig. 1 aus der Strecklage in die zurückgezogene Lage die Spindel 11 in Fig. 1 nach links eintaucht. Der Antrieb der Spindelmutter 12 erfolgt jedoch außerhalb des Motors, da eine Flüssigkeitskühlung der Lagerstelle günstiger ist als eine Flüssigkeitskühlung innerhalb des Motors.

Die Spindel 11 durchgreift auch die Kühlplatte 23 zumindest zeitweise. Wenn bei der Kühlplatte 23 von einer "Platte" die Rede ist, so bezieht sich dies auf die konkrete Ausführungsform. Andere, nichtplattenförmige Ausgestaltungen sind denkbar, so lange der gewünschte Zweck einer Lagerstellen-nahen Kühlung gewährleistet ist.

Wenn extrem hohe Genauigkeiten verlangt werden, kann neben einer normalen Flüssigkeitskühlung auch eine exakt geregelte Temperierung eingesetzt werden, sodass die Lagerstelle 14 und/oder die Kühlplatte 23 entsprechend temperiert werden.

Die Lagerstelle 14 lagert die rotatorisch drehbare und axial unverschieblich gelagerte Spindelmutter 12 im Ausführungsbeispiel über Lager 13. Die Kühlung erfolgt über die Kühlkanäle 25, wobei die Kühlflüssigkeit über die Kühlanschlüsse 24 zugeführt wird. Vorzugsweise ist die Lagerstelle 14 im wesentlichen im Abstützelement 20 angeordnet. So bildet das metallische Abstützelement selbst bereits die in Fig. 1 gestrichelt angedeutete Lagerstelle 14 aus und dient damit zugleich der Kühlung. Von Vorteil ist, wenn als Gleit- und Schmiermittel ein Öl oder ein anderes Temperatur leitendes Material verwendet wird, da dann von den Lagern 13 und der Lagerstelle 14 eine Kühlung leichter nach innen bis zur Mutter und Spindel übertragen werden kann.

### Bezugszeichenliste

- 10: Spindelantrieb
- 11: Spindel
- 12: Spindelmutter
- 13: Lager
- 14: Lagerstelle
- 15: Kreuzkopf
- 20: Abstützplatte
- 21: Antriebsmotor
- 22: Antriebswelle des Antriebsmotors
- 23: Kühlplatte
- 24: Kühlanschlüsse
- 25: Kühlkanäle
- 30: erster, stationärer Formträger
- 31: beweglicher Formträger
- 32: Holme
- M: Spritzgießform
- C: Schließmechanismus
- R: Formspannraum

## Patentansprüche

1. Formschließeinheit für Spritzgießformen (M) an einer Spritzgießmaschine zur Verarbeitung von Kunststoffen und anderer plastifizierbarer Massen wie keramische oder pulvrige Massen mit
- einem ersten, vorzugsweise stationären Formträger (30)
- einem relativ zum ersten Formträger beweglichen Formträger (31), der gemeinsam mit dem ersten Formträger (30) einen Formspannraum (R) zur Aufnahme einer Spritzgießform (M) zwischen den beiden Formträgern ausbildet,
- einem Abstützelement (20) für einen elektromechanischen Schließmechanismus (C) zum zyklischen Öffnen und Schließen der Spritzgießform (M) unter Bewegung des beweglichen Formträgers (31) auf den ersten Formträger (30) zu und von diesem weg,
- wobei der Schließmechanismus einen Servomotor als Antriebsmotor (21) aufweist,
- der wenigstens einen Spindelantrieb (10) mit einer mit einer Spindelmutter (12) an einer Lagerstelle (14) zusammenwirkenden Spindel (11) aufweist, die zur Bewegung des beweglichen Formträgers (30) mit diesem in Wirkverbindung steht,
- einer Flüssigkeitskühlung mit Kühlkanälen (25) zur Ableitung von Wärme aus dem Schließmechanismus,
**dadurch gekennzeichnet, dass** die Kühlkanäle (25) die Lagerstelle (14) des Spindelantriebs (10), an der Spindel und Spindelmutter bei deren Relativbewegung zueinander zusammenwirken, und/oder eine dieser Lagerstelle zugeordnete Kühlplatte (23) durchsetzen.

2. Formschließeinheit nach Anspruch 1, **dadurch gekennzeichnet, dass** die Kühlplatte (23) ein Zwischenflansch zwischen Antriebsmotor (21) und Lagerstelle (14) ist.

3. Formschließeinheit nach Anspruch 1 oder 2, **dadurch gekennzeichnet, dass** der Antriebsmotor (21) selbst Luft gekühlt ist.

4. Formschließeinheit nach einem der vorhergehenden Ansprüche, **dadurch gekennzeichnet, dass** der Antriebsmotor (21) ein Hohlwellenmotor ist.

5. Formschließeinheit nach einem der vorhergehenden Ansprüche, **dadurch gekennzeichnet, dass** die Spindel (11) die Kühlplatte (23) durchgreift.

6. Formschließeinheit, nach einem der vorhergehenden Ansprüche, **dadurch gekennzeichnet, dass** die Flüssigkeitskühlung geeignet ist, die Lagerstelle (14) und/oder die Kühlplatte (23) zu temperieren.

7. Formschließeinheit nach einem der vorhergehenden Ansprüche, **dadurch gekennzeichnet, dass** die Lagerstelle (14) und/oder die Kühlplatte (23) den Antriebsmotor mittelbar kühlen.

8. Formschließeinheit nach einem der vorhergehenden Ansprüche, **dadurch gekennzeichnet, dass** der Schließmechanismus (C) wenigstens einen Kniehebelmechanismus aufweist.

9. Formschließeinheit nach einem der vorhergehenden Ansprüche, **dadurch gekennzeichnet, dass** die Spindel (11) drehfest mit dem Schließmechanismus (C) vorzugsweise mit einem Kreuzkopf (15) eines Kniehebelmechanismus verbunden ist.

10. Formschließeinheit nach einem der vorhergehenden Sprüche, **dadurch gekennzeichnet, dass** die Lagerstelle (14) die rotatorisch drehbare und axial unverschieblich gelagerte Spindelmutter lagert.

11. Formschließeinheit nach einem der vorhergehenden Ansprüche, **dadurch gekennzeichnet, dass** die Lagerstelle (14) im wesentlichen im Abstützelement (33) angeordnet ist.

## Claims

1. Mould clamping unit for injection moulds (M) on an injection molding machine for processing plastics and other plasticizable compounds such as ceramic or powdery compounds, comprising
- a first, preferably stationary, mould carrier (30),
- a mould carrier (31) that can move relative to the first mould carrier which together with the first mould carrier (30) creates a mould clamping space (R) to receive an injection mould (M) between the two mould carriers,
- a support element (20) for an electromechanical clamping mechanism (C) for cyclical opening and closing of the injection mould (M) as the movable mould carrier (31) moves towards and away from the first mould carrier (30),
- wherein the clamping mechanism has a servo motor as drive motor (21),
- which has at least one spindle drive (10) with a spindle (11) interacting with a spindle nut (12) at a bearing position (14), said spindle being interactively coupled with the movable mould carrier (30) so as to move it,
- a liquid cooling with cooling channels (25) for dissipating heat from the clamping mechanism,
**characterised in that** the cooling channels (25) penetrate the bearing position (14) of the spindle drive (10), at which bearing position spindle and spindle nut cooperate during their movement relative to each other, and/or a cooling plate (23) assigned to this bearing position.

2. Mould clamping unit according to claim 1, **characterised in that** the cooling plate (23) is an intermediate flange between drive motor (21) and bearing position (14).

3. Mould clamping unit according to claim 1 or 2, **characterised in that** the drive motor (21) itself is air-cooled.

4. Mould clamping unit according to any of the preceding claims, **characterised in that** the drive motor (21) is a hollow-shaft motor.

5. Mould clamping unit according to any of the preceding claims, **characterised in that** the spindle (11) passes through the cooling plate (23).

6. Mould clamping unit according to any of the preceding claims, **characterised in that** the liquid cooling is suitable for temperature controlling the bearing position (14) and/or the cooling plate (23).

7. Mould clamping unit according to any of the preceding claims, **characterised in that** the bearing position (14) and/or the cooling plate (23) indirectly cool the drive motor.

8. Mould clamping unit according to any of the preceding claims, **characterised in that** the clamping mechanism (C) comprises at least one toggle mechanism.

9. Mould clamping unit according to any of the preceding claims, **characterised in that** the spindle (11) is connected in a rotationally fixed manner with the clamping mechanism (C) preferably with a crosshead (15) of a toggle mechanism.

10. Mould clamping unit according to any of the preceding claims, **characterised in that** the bearing position (14) carries the rotationally turnable and axially undisplaceably mounted spindle nut.

11. Mould clamping unit according to any of the preceding claims, **characterised in that** the bearing position (14) is arranged mainly in the support element (33).

## Revendications

1. Unité de fermeture de moule pour des moules à injection (M) sur une machine pour moulage par injection pour la fabrication de matières plastiques et d'autres masses plastifiables comme des masses céramiques ou poudreuses, comportant
- un premier support de moule (30), de préférence stationnaire,
- un support de moule (31) mobile par rapport au premier support de moule et qui forme avec le premier support de moule (30) un espace de moulage (R) pour y loger un moule à injection (M) entre les deux supports de moule,
- un élément de soutien (20) pour un mécanisme de fermeture électromécanique (C) pour l'ouverture et la fermeture cycliques du moule à injection (M) par déplacement du support de moule mobile (31) sur le premier support de moule (30) vers et en s'éloignant de ce dernier,
- dans lequel le mécanisme de fermeture comporte un servomoteur en tant que moteur d'entraînement (21),
- lequel comporte au moins un entraînement de broche (10) ayant une broche (11) coopérant avec un écrou de broche (12) à un emplacement de réserve (14), laquelle broche est en liaison avec l'entraînement de broche pour le déplacement du support de moule mobile (30),
- un refroidissement à liquide avec des canaux de refroidissement (25) pour évacuer la chaleur du mécanisme de fermeture,
**caractérisée en ce que** les canaux de refroidissement (25) sont présents dans l'emplacement de réserve (14) de l'entraînement de broche (10), emplacement dans lequel la broche coopère avec l'écrou de broche lors du déplacement de ces pièces l'une par rapport à l'autre, et/ou dans une plaque de refroidissement (23) associée à cet emplacement de réserve.

2. Unité de fermeture de moule selon la revendication 1, **caractérisée en ce que** la plaque de refroidissement (23) est un flasque intermédiaire entre le moteur d'entraînement (21) et l'emplacement de réserve (14).

3. Unité de fermeture de moule selon la revendication 1 ou 2, **caractérisée en ce que** le moteur d'entraînement (21) est lui-même refroidi par l'air ambiant.

4. Unité de fermeture de moule selon l'une ou l'autre des revendications précédentes, **caractérisée en ce que** le moteur d'entraînement (21) est un moteur à arbre creux.

5. Unité de fermeture selon l'une ou l'autre des revendications précédentes, **caractérisée en ce que** la broche (11) pénètre dans la plaque de refroidissement (23).

6. Unité de fermeture de moule selon l'une ou l'autre des revendications précédentes, **caractérisée en ce que** le refroidissement à liquide est apte à tempérer l'emplacement de réserve (14) et/ou la plaque de refroidissement (23).

7. Unité de fermeture de moule selon l'une ou l'autre des revendications précédentes, **caractérisée en ce que** l'emplacement de réserve (14) et/ou la plaque de refroidissement (23) refroidissent indirectement le moteur d'entraînement.

8. Unité de fermeture de moule selon l'une ou l'autre des revendications précédentes, **caractérisée en ce que** le mécanisme de fermeture (C) comporte au moins un mécanisme à genouillère.

9. Unité de fermeture de moule selon l'une ou l'autre des revendications précédentes, **caractérisé en ce que** la broche (11) est reliée au mécanisme de fermeture (C) de manière solidaire en rotation, de préférence avec une tête en forme de croix (15) d'un mécanisme à genouillère.

10. Unité de fermeture de moule selon l'une ou l'autre des revendications précédentes, **caractérisée en ce que** l'emplacement de réserve (14) loge l'écrou de broche qui y est reçu de manière rotative et immobile axialement.

11. Unité de fermeture de moule selon l'une ou l'autre des revendications précédentes, **caractérisée en ce que** l'emplacement de réserve (14) est disposé pour l'essentiel dans l'élément de soutien (33).
